# EUROPEAN PATENT APPLICATION

(11) **EP 3 885 027 A1**
(43) Date of publication of application: **29.09.2021**
(21) Application number: 19886879.6
(22) Date of filing: 27.08.2019
(51) Int. Cl.: B01D 53/047, B01D 53/04

(54) **GAS SEPARATION DEVICE AND GAS SEPARATION METHOD**

(30) Priority: 19.11.2018 JP 2018216847
(71) Applicant: Sumitomo Seika Chemicals Co., Ltd., Kako-gun, Hyogo 675-0145 (JP)
(72) Inventor: KISHII Mitsuru, Kako-gun, Hyogo 675-0145 (JP); YAMAMOTO Tomoki, Kako-gun, Hyogo 675-0145 (JP)
(74) Representative: Nederlandsch Octrooibureau
(86) International application number: PCT/JP2019/033570
(87) International publication number: WO 2020/105242

(57) **Abstract**

A gas separation apparatus 2 according to an embodiment includes a first adsorption tank 6 that has a gate-type adsorbent for adsorbing a first gas, a second adsorption tank 10 that is connected to the first adsorption tank via a first on-off valve V1 and has a Langmuir-type adsorbent for adsorbing the first gas, a first gas pipe that is provided with a second on-off valve V2 and through which a mixed gas containing the first gas and the second gas flows to the first adsorption tank, a second gas pipe that is connected to the second adsorption tank, is provided with a third on-off valve V3, and takes out a passing gas obtained by passing the mixed gas through the first adsorption tank and the second adsorption tank in this order, a third gas pipe that is connected to the first adsorption tank, is provided with a fourth on-off valve V4, and takes out the first gas desorbed from the gate-type adsorbent; and a fourth gas pipe that is connected to the second adsorption tank, is provided with a fifth on-off valve V5, and takes out the first gas desorbed from the Langmuir-type adsorbent.

## Description

### Technical Field

The present invention relates to a gas separation apparatus and a gas separation method.

### Background Art

Conventionally, Patent Literature 1 discloses that in a case of separating and purifying a target gas from a mixed gas by using a pressure swing adsorption (PSA) method, a Langmuir-type adsorbent (for example, zeolite, activated carbon, and the like) has been mainly used.

### Citation List

### Patent Literature

[Patent Literature 1] Japanese Unexamined Patent Publication No. 2002-191924 **Summary of Invention**

### Technical Problem

The Langmuir-type adsorbent basically improves the efficiency of separation and purification as a pressure range for adsorption and desorption is widened. However, in a case where the pressure range for adsorption and desorption is widened, a cost for pressure adjustment increases according to the pressure range, and thus a running cost for separation and purification increases.

Therefore, an object of the present invention is to provide the gas separation apparatus and the gas separation method capable of reducing the running cost.

### Solution to Problem

A gas separation apparatus according to one aspect of the present invention includes a first adsorption tank that has a gate-type adsorbent for adsorbing a first gas, a second adsorption tank that is connected to the first adsorption tank via a first on-off valve and has a Langmuir-type adsorbent for adsorbing the first gas, a first gas pipe that is connected to the first adsorption tank, the first gas pipe being provided with a second on-off valve and through which a mixed gas containing the first gas and a second gas different from the first gas flows, a second gas pipe that is connected to the second adsorption tank, the second gas pipe being provided with a third on-off valve, and taking out a passing gas obtained by passing the mixed gas through the first adsorption tank and the second adsorption tank in that order, a third gas pipe that is connected to the first adsorption tank, the third gas pipe being provided with a fourth on-off valve, and taking out the first gas desorbed from the gate-type adsorbent, and a fourth gas pipe that is connected to the second adsorption tank, the fourth gas pipe being provided with a fifth on-off valve, and taking out the first gas desorbed from the Langmuir-type adsorbent.

The gas separation apparatus includes a first adsorption tank having a gate-type adsorbent. Since the first gas pipe is connected to the first adsorption tank, the mixed gas is supplied to the first adsorption tank via the first gas pipe. The first gas of the mixed gas supplied to the first adsorption tank is adsorbed by the gate-type adsorbent, so that the mixed gas can be separated into the first gas and the second gas. The gate-type adsorbent does not adsorb the first gas according to a partial pressure of the first gas in the first adsorption tank. In that case, the first gas passes through the first adsorption tank. Since the second adsorption tank having the Langmuir-type adsorbent is connected to the first adsorption tank, the first gas passing through the first adsorption tank can be adsorbed by the Langmuir-type adsorbent in the second adsorption tank. As a result, the second gas separated from the mixed gas can be taken out from the second gas pipe. In addition, in a case where the first gas adsorbed on the gate-type adsorbent and the Langmuir-type adsorbent is desorbed, the first gas can be recovered via the third gas pipe and the fourth gas pipe.

In the gas separation apparatus, the pressures in the first adsorption tank and the second adsorption tank can be independently controlled by controlling the first to fifth on-off valves. Therefore, in a case where the first gas is desorbed from the gate-type adsorbent and the Langmuir-type adsorbent to which the first gas is adsorbed, the pressure corresponding to the gate-type adsorbent and the Langmuir-type adsorbent can be applied. In the gate-type adsorbent, since it is not necessary to decrease the pressure more than necessary, a pressure range for adsorption and desorption can be narrowed, so that a cost required for pressure adjustment can be reduced. Therefore, the running cost can be reduced.

The third gas pipe and the fourth gas pipe may be connected to a pressure regulator. In this case, the pressures in the first adsorption tank and the second adsorption tank can be easily regulated to desorb the first gas from the gate-type adsorbent and the Langmuir-type adsorbent.

A gas separation method according to another aspect of the present invention includes an adsorption process of causing a mixed gas containing a first gas and a second gas different from the first gas to flow through a first adsorption tank, which has a gate-type adsorbent for adsorbing the first gas, and a second adsorption tank, which is connected to the first adsorption tank via an on-off valve and has a Langmuir-type adsorbent for adsorbing the first gas, in that order, by opening the on-off valve to increase pressures in the first adsorption tank and the second adsorption tank, thereby adsorbing the first gas in the mixed gas to the gate-type adsorbent and the Langmuir-type adsorbent, and taking out the second gas from a first take-out pipe connected to the second adsorption tank, a first desorption process of desorbing the first gas from the gate-type adsorbent and the Langmuir-type adsorbent, and taking out the first gas from a second take-out pipe connected to the first adsorption tank by opening the on-off valve to decrease the pressure in the first adsorption tank to a pressure at which the first gas of the gate-type adsorbent is desorbed, and a second desorption process of desorbing the first gas from the Langmuir-type adsorbent, and taking out the desorbed first gas from a third take-out pipe connected to the second adsorption tank by closing the on-off valve to decrease the pressure in the second adsorption tank after the first desorption process.

In the above method, in the adsorption process, the mixed gas flows in order of the gate-type adsorbent and the Langmuir-type adsorbent. The first gas of the mixed gas is adsorbed by the gate-type adsorbent and the Langmuir-type adsorbent, so that the first gas and the second gas are separated from the mixed gas. In a case where the partial pressure of the first gas in the first adsorption tank is lower than a pressure capable of adsorbing the first gas, the first gas passes through the first adsorption tank without being adsorbed by the gate-type adsorbent. Since the first gas that has passed through the first adsorption tank is adsorbed by the Langmuir-type adsorbent, the second gas can be more reliably taken out from the mixed gas. In addition, by performing the first desorption process and the second desorption process, the gate-type adsorbent and the Langmuir-type adsorbent can be regenerated and the first gas can be taken out.

In the second desorption process, since the first on-off valve is closed, the pressure in the second adsorption tank can be reduced while maintaining the pressure in the first adsorption tank corresponding to the gate-type adsorbent. In the gate-type adsorbent, the pressure adjustment range can be narrowed since it is not necessary to decrease the pressure more than necessary for desorption. Accordingly, the cost required for pressure adjustment can be reduced. Therefore, the running cost can be reduced.

The gas separation method according to an embodiment may further include a first cleaning process of taking out the first gas desorbed from the Langmuir-type adsorbent via the second take-out pipe while causing a non-adsorbed gas substantially not adsorbed to the Langmuir-type adsorbent to flow through the second adsorption tank by closing the on-off valve after the second desorption process, and a second cleaning process of taking out the first gas desorbed from the Langmuir-type adsorbent and the gate-type adsorbent via the third take-out pipe while causing a non-adsorbed gas substantially not adsorbed to the gate-type adsorbent to flow from the second adsorption tank to the first adsorption tank by opening the on-off valve after the first cleaning process.

In this case, the desorption of the first gas can be promoted from the gate-type adsorbent and the Langmuir-type adsorbent. The first on-off valve is closed in the first cleaning process and the second on-off valve is opened in the second cleaning process, so that the first cleaning process and the second cleaning process can be performed at a pressure corresponding to the adsorption and desorption performance of the Langmuir-type adsorbent and the gate-type adsorbent.

The gas separation method according to an embodiment may further include a return process of returning a part of the gas taken out in the first desorption process and the second desorption process to at least one of the first adsorption tank and the second adsorption tank. The gas taken out in the first desorption process and the second desorption process may contain components other than the first gas. By performing the return process, the first gas of the gas taken out in the first desorption process and the second desorption process can be adsorbed again on the gate-type adsorbent and the Langmuir-type adsorbent. Since the first gas adsorbed in this way can be taken out by performing, for example, the first desorption process and the second desorption process, a recovery rate of the first gas can be improved.

The gas separation method according to an embodiment may further include a pressure increasing process of increasing the pressure in the first adsorption tank and the second adsorption tank before the adsorption process. Since the pressures in the first adsorption tank and the second adsorption tank can be increased in this pressure increasing process, for example, in a case where the adsorption process is performed after the pressure increasing process, the first gas passing through the first adsorption tank can be reduced.

Another example of a gas separation method according to another aspect of the present invention includes an adsorption process of causing a mixed gas containing a first gas and a second gas different from the first gas to flow through a first adsorption portion, which has a gate-type adsorbent for adsorbing the first gas, and a second adsorption portion, which is disposed in series with the first adsorption portion and has a Langmuir-type adsorbent for adsorbing the first gas, in that order, to increase pressures in the first adsorption portion and the second adsorption portion, thereby adsorbing the first gas to the gate-type adsorbent and the Langmuir-type adsorbent; and a desorption process of decreasing the pressures in the first adsorption portion and the second adsorption portion, thereby desorbing the first gas from the gate-type adsorbent and the Langmuir-type adsorbent.

In another example of the above-described gas separation method, the first gas and the second gas can be separated from the mixed gas by using the gate-type adsorbent. The first gas that has not been adsorbed on the gate-type adsorbent is adsorbed by the Langmuir-type adsorbent. Therefore, the first gas and the second gas can be more reliably separated from the mixed gas. Due to its adsorption and desorption performance, the gate-type adsorbent can narrow the pressure range for adsorption and desorption. Accordingly, the cost required for pressure adjustment can be reduced, and the running cost can be reduced.

### Advantageous Effects of Invention

According to the present invention, it is possible to provide the gas separation apparatus and the gas separation method capable of reducing the running cost.

### Brief Description of Drawings

FIG. 1 is a diagram illustrating adsorption and desorption characteristics of a gate-type adsorbent.
FIG. 2 is a diagram illustrating adsorption and desorption characteristics of a Langmuir-type adsorbent.
FIG. 3 is a schematic diagram of a gas separation apparatus according to a first embodiment.
FIG. 4 is a schematic diagram of a gas separation apparatus according to a second embodiment.

### Description of Embodiments

Hereinafter, embodiments of the present invention will be described with reference to the drawings. The same elements are designated by the same reference numerals, and duplicate description will be omitted. The dimensional ratios in the drawings do not always match those described.

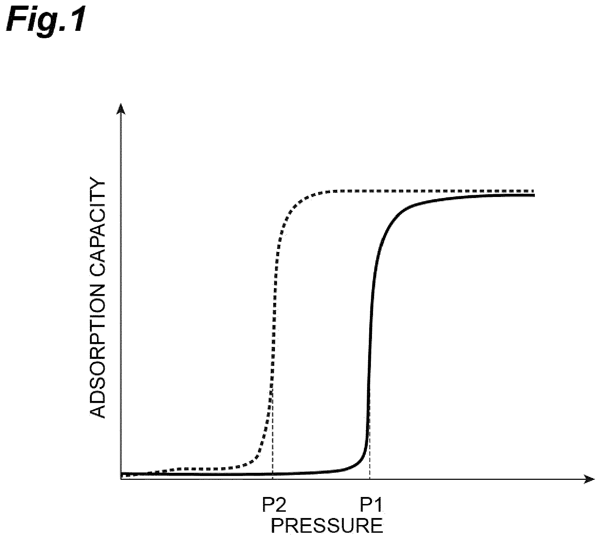

FIG. 1 is a diagram illustrating an adsorption and desorption performance of the gate-type adsorbent. A horizontal axis of FIG. 1 shows a pressure and a vertical axis shows an adsorption capacity of the gate-type adsorbent of a substance to be adsorbed. A solid line in FIG. 1 shows an adsorption characteristic, and a broken line shows a desorption characteristic. The gate-type adsorbent is an adsorbent having a gate-type adsorption and desorption ability. As shown in FIG. 1, the gate-type adsorbent is capable of rapidly adsorbing the substance to be adsorbed from a specific pressure PI and rapidly desorbing the substance to be adsorbed from a specific pressure P2 lower than the pressure PI. An example of the gate-type adsorbent includes a porous coordination polymer (PCP) having the gate-type adsorption and desorption ability. The PCP is sometimes referred to as a metal-organic framework (MOF). Examples of the gate-type adsorbent include ZIF-7, and MIL-53.

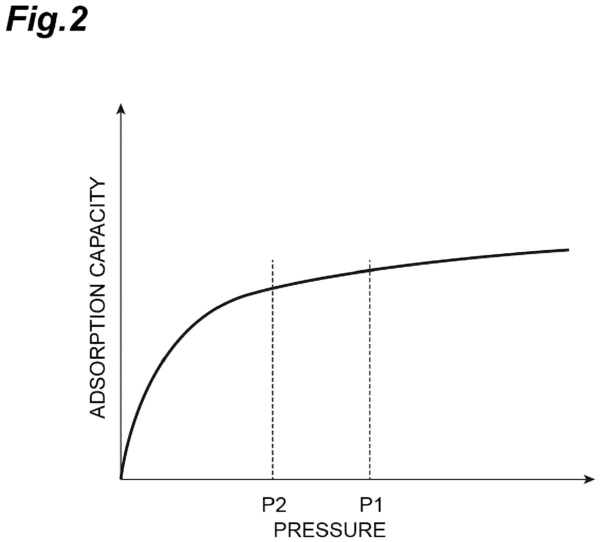

FIG. 2 is a diagram illustrating the adsorption and desorption performance of the Langmuir-type adsorbent. A horizontal axis of FIG. 2 shows a pressure and a vertical axis shows an adsorption capacity of the Langmuir-type adsorbent of a substance to be adsorbed. The Langmuir-type adsorbent is an adsorbent which does not have a rapid adsorption and desorption characteristic like the gate-type adsorbent, and as shown in FIG. 2, smoothly adsorbs and desorbs the substance to be adsorbed according to the pressure change. Examples of Langmuir-type adsorbent include zeolite, activated carbon, and the like. Zeolites may also function as the gate-type adsorbent under certain conditions. In FIG. 2, for convenience of explanation, the pressure PI and the pressure P2 shown in FIG. 1 are shown.

### (First Embodiment)

In the first embodiment, a case where the second gas is separated and purified as the target gas from the mixed gas containing the first gas and the second gas by using a pressure swing adsorption method (PSA method) will be described. Examples of the first gas include carbon dioxide (CO₂) gas and carbon monoxide (CO) gas, and examples of the second gas include hydrogen (H₂) gas and helium (He) gas. The mixed gas may contain a gas other than the first gas and the second gas.

As the gate-type adsorbent and the Langmuir-type adsorbent used in the first embodiment, out of the adsorbents exemplified above, the gate-type adsorbent and the Langmuir-type adsorbent may be used which preferentially adsorb the first gas (in other words, more) and substantially do not adsorb the second gas (in other words, almost). Hereinafter, for the sake of brevity, the above " preferentially" and "substantially" will be omitted unless otherwise specified.

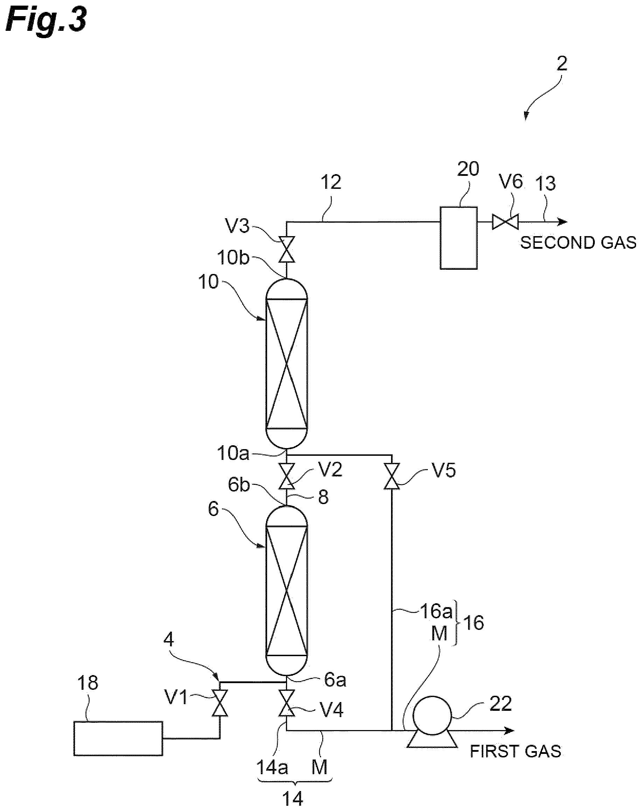

An example of the gas separation apparatus 2 will be described with reference to FIG. 3.

The gas separation apparatus 2 includes a first gas pipe 4, a first adsorption tank 6, a connecting pipe 8, a second adsorption tank 10, a second gas pipe (first take-out pipe) 12, a third gas pipe (second take-out pipe) 14, and a fourth gas pipe (third take-out pipe) 16.

The first gas pipe 4 is a gas pipe through which the mixed gas flows to supply the mixed gas to the first adsorption tank 6. One end of the first gas pipe 4 is connected to a gas passage port 6a of the first adsorption tank 6, and the other end is connected to a mixed gas supply source 18. In a case where the mixed gas which is a raw material gas is generated by another apparatus, for example, the other end of the first gas pipe 4 may be connected to the other apparatus. The first gas pipe 4 is provided with an automatic on-off valve (first on-off valve) V1.

The first adsorption tank 6 has a gate-type adsorbent inside. The gate-type adsorbent is filled in, for example, the first adsorption tank 6. The first adsorption tank 6 has the gas passage port 6a and a gas passage port 6b. The gas passage port 6a is connected to the first gas pipe 4. The connecting pipe 8 is connected to the gas passage port 6b.

The connecting pipe 8 is a gas pipe that connects the first adsorption tank 6 and the second adsorption tank 10. One end of the connecting pipe 8 is connected to the gas passage port 6b, and the other end is connected to the gas passage port 10a of the second adsorption tank 10. The connecting pipe 8 is provided with an automatic on-off valve (second on-off valve) V2. Accordingly, the first adsorption tank 6 and the second adsorption tank 10 are connected via the automatic on-off valve V2.

The second adsorption tank 10 has the Langmuir-type adsorbent inside. The Langmuir-type adsorbent is filled in the second adsorption tank 10, for example. The second adsorption tank 10 has the gas passage port 10a and a gas passage port 10b. The gas passage port 10a is connected to the connecting pipe 8. One end of the second gas pipe 12 is connected to the gas passage port 10b.

The second gas pipe 12 is a gas pipe for mainly taking out the passing gas which has been supplied from the first adsorption tank 6 to the second adsorption tank 10, via the connecting pipe 8 and the gas passage port 10b, and has passed through the second adsorption tank 10. The second gas pipe 12 is provided with an automatic on-off valve (third on-off valve) V3.

The passing gas is a gas purified by removing the first gas from the mixed gas. Specifically, the passing gas is the second gas (target gas). The passing gas is ideally composed of only the second gas, but in an actual apparatus, it contains a small amount of other components (for example, the first gas). Accordingly, the passing gas is a concentrated gas (or a second gas enriched gas) in which a proportion of the second gas is increased as compared with a case of the mixed gas which is the raw material gas. Hereinafter, for convenience of explanation, the passing gas is referred to as the second gas unless otherwise specified. The other end of the second gas pipe 12 is connected to a gas storage portion 20. The gas storage portion 20 is a tank or a cylinder for storing the second gas which is the target gas.

The gas storage portion 20 is provided with a fifth gas pipe 13 for taking out the second gas stored in the gas storage portion 20. The fifth gas pipe 13 may be provided with a regulating valve V6 for regulating the pressures in the first adsorption tank 6 and the second adsorption tank 10. Examples of the regulating valve V6 include a back pressure valve, a flow rate regulating valve and an opening degree regulating valve.

The third gas pipe 14 is a gas pipe for taking out the first gas desorbed from the gate-type adsorbent in a case where the first gas adsorbed on the gate-type adsorbent is desorbed. In the first embodiment, the third gas pipe 14 has a main trunk path M and a secondary trunk path 14a. One end of the secondary trunk path 14a is connected to the first adsorption tank 6. One end of the secondary trunk path 14a is connected to, for example, the gas passage port 6a (a connection side of the first adsorption tank 6 with the first gas pipe 4). In the embodiment shown in FIG. 3, one end of the secondary trunk path 14a is connected to the gas passage port 6a by being connected to a region of the first gas pipe 4 between the automatic on-off valve V1 and the gas passage port 6a. An automatic on-off valve (a fourth on-off valve) V4 is provided on the secondary trunk path 14a. The other end of the secondary trunk path 14a is connected to the main trunk path M. A vacuum pump (pressure regulator) 22 is provided on the main trunk path M. Accordingly, in the third gas pipe 14, a vacuum pump 22 is provided on the downstream side of the automatic on-off valve V4 in the flow direction of the first gas in the third gas pipe 14.

The fourth gas pipe 16 is a gas pipe for taking out the first gas desorbed from the Langmuir-type adsorbent in a case where the first gas adsorbed on the Langmuir-type adsorbent is desorbed. In the first embodiment, the fourth gas pipe 16 has the main trunk path M and a secondary trunk path 16a. One end of the secondary trunk path 16a is connected to the second adsorption tank 10. One end of the secondary trunk path 16a is connected to, for example, the gas passage port 10a (the connection side of the second adsorption tank 10 with the connecting pipe 8). In the embodiment shown in FIG. 3, one end of the secondary trunk path 16a is connected to the gas passage port 10a by being connected to a region of the connecting pipe 8 between the automatic on-off valve V2 and the gas passage port 10a. An automatic on-off valve (a fifth on-off valve) V5 is provided on the secondary trunk path 16a. The other end of the secondary trunk path 16a is connected to the main trunk path M. The main trunk path M is common to the third gas pipe 14. Accordingly, in the fourth gas pipe 16, a vacuum pump 22 is provided on the downstream side of the automatic on-off valve V5 in the flow direction of the first gas in the fourth gas pipe 16.

The third gas pipe 14 and the fourth gas pipe 16 do not have to share the main trunk path M. In this case, a vacuum pump may be provided in each of the third gas pipe 14 and the fourth gas pipe 16.

The automatic on-off valves V1 to V5, the regulating valve V6, the vacuum pump 22, and the like may be controlled by, for example, a control device (not shown).

Next, an example of a gas separation method using the gas separation apparatus 2 will be described. The gas separation method includes an adsorption process, a first desorption process, and a second desorption process. The gas separation method may include a first cleaning process, a second cleaning process, and a pressure increasing process after the second desorption process. Here, each process of the gas purification method in a case of having the first cleaning process, the second cleaning process and the pressure increasing process will be described.

### [Adsorption Process]

In the adsorption process, the automatic on-off valves V1, V2, and V3 are opened and the automatic on-off valves V4 and V5 are closed. Since the automatic on-off valve V2 is opened, the first adsorption tank 6 and the second adsorption tank 10 are in communication with each other. In this state, the mixed gas is made to flow via the first gas pipe 4 to the first adsorption tank 6 and the second adsorption tank 10 to increase the pressures in the first adsorption tank 6 and the second adsorption tank 10, and the first gas is adsorbed by the gate-type adsorbent and the Langmuir-type adsorbent. As a result, the second gas is taken out from the second gas pipe 12. The second gas, which is the taken-out target gas, is stored in the gas storage portion 20. The second gas stored in the gas storage portion 20 may be appropriately taken out via the fifth gas pipe 13. In a case where the gas separation apparatus 2 has the regulating valve V6, the regulating valve V6 may be regulated such that the pressures of the first adsorption tank 6 and the second adsorption tank 10 are increased in the adsorption process.

### [First Desorption Process]

After the adsorption process, the automatic on-off valve V4 is opened, while the automatic on-off valves V1 and V3 are closed. Therefore, in the first desorption process, the automatic on-off valves V2 and V4 are opened, and the automatic on-off valves V1, V3, and V5 are closed. While the automatic on-off valves V1 to V5 are maintained in the above state, the vacuum pump 22 is operated to decrease the pressure in the first adsorption tank 6 to a pressure suitable for desorption of the first gas (a pressure P2 or less in FIG. 1) from the gate-type adsorbent. Since the automatic on-off valve V2 is opened, the first adsorption tank 6 and the second adsorption tank 10 communicate with each other. Accordingly, the pressure in the second adsorption tank 10 also decreases. As a result, the first gas is desorbed from the gate-type adsorbent and the Langmuir-type adsorbent. The desorbed first gas is discharged via the third gas pipe 14.

### [Second Desorption Process]

After the first desorption process, the automatic on-off valve V5 is opened, while the automatic on-off valves V2 and V4 are closed. In the second desorption process, the automatic on-off valve V5 is opened, while the automatic on-off valves V1 to V4 are closed. While maintaining the automatic on-off valves V1 to V5 in the above state, the vacuum pump 22 is operated subsequent to the second desorption process to decreases the pressure in the second adsorption tank 10 to a pressure suitable for desorption of the first gas adsorbed on the Langmuir-type adsorbent. Since the automatic on-off valve V5 is opened, the first gas desorbed from the Langmuir-type adsorbent is discharged via the fourth gas pipe 16.

### [First Cleaning Process]

After the second desorption process, an automatic on-off valve V3 is opened. Therefore, in the first cleaning process, the automatic on-off valves V3 and V5 are opened, and the automatic on-off valves V1, V2 and V4 are closed. While maintaining the automatic on-off valves V1 to V5 in the above state, the vacuum pump 22 is operated following the second desorption process. As a result, the second gas in the gas storage portion 20 flows into the second adsorption tank 10. Since the second gas does not adsorb to the Langmuir-type adsorbent in the second adsorption tank 10, it is a non-adsorbed gas and also functions as a cleaning gas. The inflow of the second gas (non-adsorbed gas) into the second adsorption tank 10 promotes the desorption of the first gas from the Langmuir-type adsorbent. The first gas desorbed from the Langmuir-type adsorbent is discharged via the fourth gas pipe 16 as in the case of the second desorption process.

### [Second Cleaning Process]

After the first cleaning process, the automatic on-off valves V2 and V4 are opened, while the automatic on-off valve V5 is closed. Therefore, in the second cleaning process, the automatic on-off valves V2, V3, and V4 are opened, and the automatic on-off valves V1 and V5 are closed. Since the automatic on-off valve V2 is opened, the first adsorption tank 6 and the second adsorption tank 10 are in communication with each other. Accordingly, with the automatic on-off valve V1 to V5 maintained in the above-described state, the vacuum pump 22 is operated subsequent to the first cleaning process, so that the second gas in the gas storage portion 20 flows through the second adsorption tank 10 and the first adsorption tank 6 in that order. Since the second gas does not adsorb to the gate-type adsorbent in the first adsorption tank 6, it is a non-adsorbed gas with respect to the gate-type adsorbent and also functions as a cleaning gas. The inflow of the second gas (non-adsorbed gas) into the second adsorption tank 10 and the first adsorption tank 6 promotes the desorption of the first gas from the Langmuir-type adsorbent and the gate-type adsorbent. The first gas desorbed from the Langmuir-type adsorbent and the gate-type adsorbent is discharged via the third gas pipe 14 as in the case of the first desorption process.

### [Pressure Increasing Process]

After the second cleaning process, the automatic on-off valve V4 is closed. Therefore, in the pressure increasing process, the automatic on-off valves V2 and V3 are opened, and the automatic on-off valves V1, V4, and V5 are closed. Since the automatic on-off valves V2 and V3 are opened, the second gas in the gas storage portion 20 flows through the second adsorption tank 10 and the first adsorption tank 6, in that order, as in the case of the second cleaning process. Since the automatic on-off valves V1, V4, and V5 are closed, the pressure in the second adsorption tank 10 and the first adsorption tank 6 is increased by the inflow of the second gas into the second adsorption tank 10 and the first adsorption tank 6.

The second gas is separated and purified from the mixed gas by performing the above-described adsorption process. By repeating a basic cycle of performing the adsorption process, the first desorption process, the second desorption process, the first cleaning process, the second cleaning process, and the pressure increasing process, in that order, the second gas, which is the target gas, is separated and purified from the mixed gas for each basic cycle.

In a case where the above basic cycle is repeated, the adsorption process of the next basic cycle is performed after the pressure increasing process. Therefore, the pressure increasing process is also a process performed before the adsorption process. On the other hand, the basic cycle of performing the pressure increasing process, the adsorption process, the first desorption process, the second desorption process, the first cleaning process, and the second cleaning process, in that order, may be repeated.

In the gas separation apparatus 2, the first adsorption tank 6 and the second adsorption tank 10 are disposed, in that order, from the upstream side (gas passage port 6a side of the first adsorption tank 6) to the downstream side (gas passage port 10b side of the second adsorption tank 10) in the flow direction of the mixed gas.

Therefore, in a case where the mixed gas is supplied to the first adsorption tank 6 in the adsorption process, the mixed gas flows in the order of the first adsorption tank 6 and the second adsorption tank 10. Accordingly, the first gas is adsorbed by the gate-type adsorbent in the first adsorption tank 6. The first gas that has not been adsorbed by the gate-type adsorbent is adsorbed by the Langmuir-type adsorbent in the second adsorption tank 10 disposed downstream of the first adsorption tank 6.

For example, the gate-type adsorbent rapidly adsorbs the first gas at a specific pressure PI (refer to FIG. 1), but hardly adsorbs the first gas in a case where the pressure in the first adsorption tank 6 (specifically, the partial pressure of the first gas) is less than the pressure PI. Therefore, in the adsorption process, when the pressure in the first adsorption tank 6 (partial pressure of the first gas) is lower than a pressure capable of adsorbing the first gas (for example, in a case where an initial stage of the adsorption process, especially the pressure increasing process, is not performed), the first gas in the mixed gas passes through the first adsorption tank 6 without being adsorbed by the gate-type adsorbent. In the adsorption process, in a case where the pressure (partial pressure of the first gas) in the first adsorption tank 6 increases to the pressure PI or more, the first gas is adsorbed on the gate-type adsorbent in the first adsorption tank 6. However, in a case where the first gas is adsorbed on the gate-type adsorbent of the first adsorption tank 6, the partial pressure of the first gas in the first adsorption tank 6 may decrease. In this case as well, the first gas passes through the first adsorption tank 6. In this way, even in a case where the first gas passes through the first adsorption tank 6, the Langmuir-type adsorbent in the second adsorption tank 10 can adsorb the first gas as described above. As a result, the second gas having a high-purity can be obtained from the mixed gas.

As described above, in the gas separation apparatus 2 and the gas separation method using the same, the first gas is adsorbed by the gate-type adsorbent to separate the second gas from the mixed gas, while the first gas not adsorbed by the gate-type adsorbent is adsorbed by the Langmuir-type adsorbent.

The gate-type adsorbent rapidly adsorbs the first gas at the specific pressure PI (refer to FIG. 1), while rapidly desorbing the first gas at the specific pressure P2 (refer to FIG. 1). Therefore, the range of the adsorption and desorption pressure can be narrowed while maintaining the separation and purification efficiency as long as it is within the pressure range in which the adsorption and desorption ability can be exhibited. Accordingly, since the cost required for pressure adjustment can be reduced, the running cost can be reduced by the gas separation apparatus 2 and the gas separation method using the gas separation apparatus 2.

In the configuration of the gas separation apparatus 2, the first desorption process and the second desorption process can be performed by appropriately controlling the automatic on-off valves V1 to V5. Therefore, the gate-type adsorbent and the Langmuir-type adsorbent can be regenerated and used repeatedly.

Further, as shown in FIG. 1, in the gate-type adsorbent, the adsorbed first gas is desorbed in a case where the pressure is P2 or less. Therefore, in the first desorption process, it is enough that the pressure in the first adsorption tank 6 is reduced to a degree slightly lower than the pressure P2 or the pressure P2.

Since the first adsorption tank 6 and the second adsorption tank 10 are connected via the automatic on-off valve V2, a space in the first adsorption tank 6 and a space in the second adsorption tank 10 can be switched between a connected state and a separated state by controlling the automatic on-off valve V2. Further, the third gas pipe 14 is connected to the first adsorption tank 6, and the fourth gas pipe 16 is connected to the second adsorption tank 10. Therefore, the pressure in the first adsorption tank 6 and the second adsorption tank 10 can be controlled independently. Accordingly, in the second desorption process, the pressure in the second adsorption tank 10 having the Langmuir-type adsorbent can further decrease while maintaining the pressure which is capable of maintaining the desorption ability (the gate is closed) from the gate-type adsorbent in the first adsorption tank 6. As described above, the running cost can be reduced since the pressure of the first adsorption tank 6 side may be controlled according to the adsorption and desorption ability of the gate-type adsorbent.

In the second desorption process, the pressure in the second adsorption tank 10 is further reduced from the first desorption process to desorb more first gas from the Langmuir-type adsorbent in the second adsorption tank 10. However, the second adsorption tank 10 having the Langmuir-type adsorbent only needs to be able to adsorb the first gas that has not been adsorbed by the first adsorption tank 6. Therefore, for example, a capacity of the second adsorption tank 10 can be reduced as compared with a case where the first gas is removed from the mixed gas by only the second adsorption tank 10 (that is, only the Langmuir-type adsorbent) without providing the first adsorption tank 6. In other words, the amount of Langmuir-type adsorbent can be reduced. Therefore, the time required to reduce the pressure in the second adsorption tank 10 and the power of the vacuum pump 22 can be reduced as compared with the case where the first gas is removed from the mixed gas only in the second adsorption tank 10. As a result, the running cost of the gas separation apparatus 2 and the gas separation method using the gas separation apparatus 2 can be reduced.

In an embodiment in which the gas separation method has the first cleaning process and the second cleaning process, the first gas can be further desorbed from the gate-type adsorbent and the Langmuir-type adsorbent by the first cleaning process and the second cleaning process. Therefore, in a case where the next adsorption process is performed after the adsorption process is performed once, a large amount of first gas can be adsorbed by the gate-type adsorbent and the Langmuir-type adsorbent, so that in a case where the second gas is separated and purified from the mixed gas by repeatedly using the gas separation apparatus 2 (by repeating the basic cycle) , a quality of the second gas as the target gas can be easily maintained. Further, by performing the first cleaning process and the second cleaning process, a larger amount of first gas can be adsorbed on the gate-type adsorbent and the Langmuir-type adsorbent in the adsorption process as described above, so that the amount of the second gas obtained in the adsorption process increases. As a result, the recovery efficiency of recovering the second gas from the mixed gas is increased.

As described above, in the gas separation apparatus 2, the pressures in the first adsorption tank 6 and the second adsorption tank 10 can be controlled independently. Therefore, the first cleaning process can be performed at a pressure corresponding to the Langmuir-type adsorbent, and the second cleaning process can be performed at a pressure corresponding to the gate-type adsorbent. As a result, the gas in the first adsorption tank 6 and the second adsorption tank 10 can be effectively utilized. For example, the amount of pressure increased in the pressure increasing process can be reduced by performing the first cleaning process and the second cleaning process. As a result, it is possible to increase the amount of the second gas recovered. In a case where the pressure increasing process is not performed, since the pressure in the first adsorption tank 6 can be maintained at a predetermined pressure or more when the adsorption process is performed again, a large amount of first gas can be easily adsorbed by the gate-type adsorbent of the first adsorption tank 6.

In the embodiment in which the gas separation method has a pressure increasing process, the pressure in the first adsorption tank 6 and the second adsorption tank 10 increases in the pressure increasing process. Therefore, in the adsorption process performed after the pressure increasing process, the first gas is easily adsorbed to the gate-type adsorbent, and a slippage of the first gas to the second adsorption tank 10 can be reduced. Even in the Langmuir-type adsorbent in the second adsorption tank 10, the higher the pressure, the larger the adsorption capacity, so that a larger amount of the first gas can be adsorbed. As a result, the second gas having a high-purity can be obtained.

### (Second Embodiment)

The first embodiment is an embodiment in which the second gas of the first gas and the second gas contained in the mixed gas is separated and purified as the target gas. However, the first gas may be separated as the target gas. A second embodiment in which the first gas is separated from the mixed gas as the target gas will be described. The examples of the first gas and the second gas in the second embodiment are the same as those in the first embodiment.

As the gate-type adsorbent and the Langmuir-type adsorbent used in the second embodiment, adsorbents having the same properties as those in the first embodiment can be used. The examples of the gate-type adsorbent of the second embodiment can be the same as that of the first embodiment.

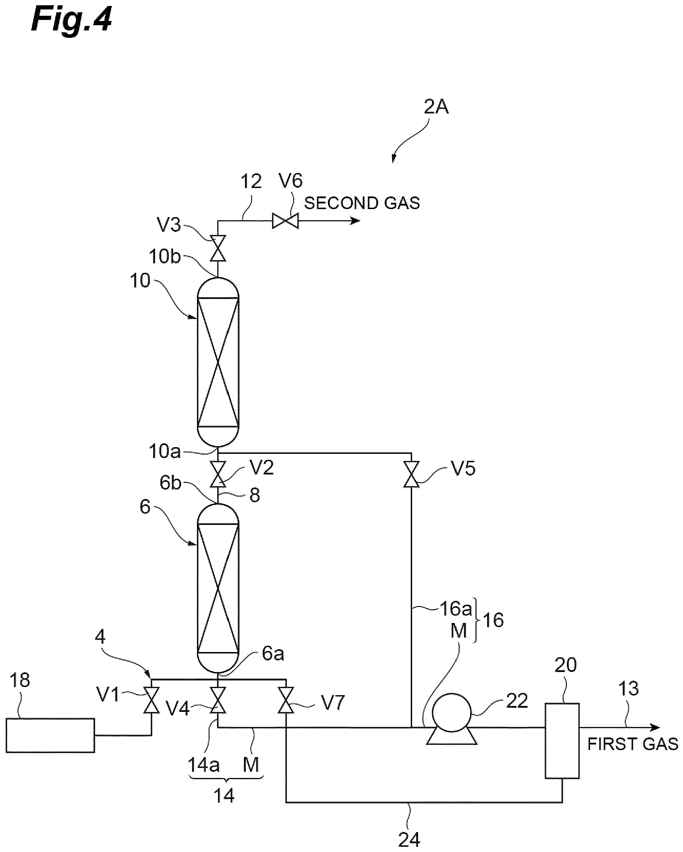

As shown in FIG. 4, a gas separation apparatus 2A according to the second embodiment is mainly different from the gas separation apparatus 2 according to the first embodiment in that the gas storage portion 20 is connected to the main trunk path M. Since a configuration of the gas separation apparatus 2A except for the above difference is the same as that of the gas separation apparatus 2, an explanation of the configuration of the gas separation apparatus 2A except for the above difference is omitted.

The gas storage portion 20 stores the first gas taken out via the third gas pipe 14 and the fourth gas pipe 16 as the target gas. The gas storage portion 20 is connected to the third gas pipe 14 and the fourth gas pipe 16 on the opposite sides of the first adsorption tank 6 and the second adsorption tank 10. The fifth gas pipe 13 is connected to the gas storage portion 20 as in the case of the first embodiment. In the second embodiment, the fifth gas pipe 13 is a gas pipe for taking out the first gas stored in the gas storage portion 20. The fifth gas pipe 13 may be provided with a regulating valve for regulating the amount of the first gas taken out.

Next, a gas separation method using the gas separation apparatus 2A will be described. The gas separation method of the second embodiment has the adsorption process, the first desorption process, the second desorption process, and the pressure increasing process.

In the adsorption process, except that the second gas is exhausted since the second gas flowing from the second adsorption tank 10 to the second gas pipe 12 is an impurity, and the first gas desorbed from the gate-type adsorbent and the Langmuir-type adsorbent gas in the first desorption process and the second desorption process is stored as a target in the gas storage portion 20, the adsorption process, the first desorption process, the second desorption process, and the pressure increasing process in the second embodiment are the same as the corresponding process in the first embodiment. For example, in order to regulate the pressures in the first adsorption tank 6 and the second adsorption tank 10 in the adsorption process, the gas separation apparatus 2A may be provided in the second gas pipe 12 with a regulating valve V6 for regulating the pressure in a rear stage of the automatic on-off valve V3. The example of the regulating valve V6 is the same as that of the first embodiment.

In the gas separation apparatus 2A and the gas separation method using the same, the first gas separated from the mixed gas can be recovered by performing the first desorption process and the second desorption process after the adsorption process. By repeating a basic cycle of performing the adsorption process, the first desorption process, the second desorption process, and the pressure increasing process, in that order, a target first gas can be separated and recovered from the mixed gas for each basic cycle.

The pressure increasing process is also a process performed before the adsorption process, and the cycle of performing the pressure increasing process, the adsorption process, the first desorption process, and the second desorption process, in that order, may be repeated as a basic cycle as in the first embodiment.

The gas in the gas storage portion 20 is the first gas separated from the mixed gas. Ideally, all the first gas is separated from the mixed gas, but in an actual machine, some impurities may be slightly mixed. Therefore, the gas in the gas storage portion 20 is also a concentrated gas (first gas enriched gas) having a higher partial pressure (having a high proportion of the first gas) of the first gas which is a target gas than the mixed gas supplied from the mixed gas supply source 18.

In order to further separate the first gas from such concentrated gas, the gas separation apparatus 2A may have a sixth gas pipe 24 for returning the gas in the gas storage portion 20 to the first adsorption tank 6. In the embodiment of the gas separation apparatus 2A shown in FIG. 4, the sixth gas pipe 24 is connected to the gas passage port 6a of the first adsorption tank 6. For example, as shown in FIG. 4, by being connected between the automatic on-off valve V1 and the gas passage port 6a of the first gas pipe 4 or between the automatic on-off valve V4 and the gas passage port 6a of the secondary trunk path 14a of the third gas pipe 14, the sixth gas pipe 24 can be connected to the gas passage port 6a. The sixth gas pipe 24 is provided with an automatic on-off valve V7. The automatic on-off valve V7 can be controlled by a control device (not shown) that controls the automatic on-off valves V1 to V5 and the like.

In the embodiment in which the gas separation apparatus 2A has the sixth gas pipe 24, the gas separation method further has a return process of returning the concentrated gas to the first adsorption tank 6.

The return process may be performed after the adsorption process, the first desorption process and the second desorption process have been performed once in the gas separation method. For example, when the plurality of processes (adsorption process, first desorption process, second desorption process, and pressure increasing process) in the gas separation method are repeated as one basic cycle by using the gas separation apparatus 2A, the process need not be performed in the first basic cycle. Further, in the second and subsequent basic cycles, it is preferable to perform, for example, between the adsorption process and the first desorption process.

In a case where the return process is performed (for example, in a case where is the return process is performed between the adsorption process and the first desorption process), the automatic on-off valves V2, V3, and V7 are opened, and the automatic on-off valves V1, V4, and V5 are closed. As a result, the concentrated gas in the gas storage portion 20 is returned from the gas storage portion 20 to the first adsorption tank 6 and the second adsorption tank 10 via the sixth gas pipe 24. Therefore, according to the pressures in the first adsorption tank 6 and the second adsorption tank 10, the first gas of the returned concentrated gas is re-adsorbed to at least one of the gate-type adsorbent and the Langmuir-type adsorbent. The first gas re-adsorbed in this way is taken out in the first desorption process and the second desorption process. In processes other than the return process, the automatic on-off valve V7 may be closed.

The state of the automatic on-off valves V1 to V5 and the automatic on-off valve V7 in the return process may be such that the concentrated gas flows to the first adsorption tank 6 and the second adsorption tank 10 and the first gas can be adsorbed by the gate-type adsorbent and the Langmuir-type adsorbent. Therefore, the states of the automatic on-off valves V1 to V5 and the automatic on-off valve V7 in the return process are not limited to the above-exemplified cases. In a case of performing the return process, it is preferable that the automatic on-off valve V3 is opened in order to discharge the second gas.

In the gas separation apparatus 2A, as in the case of the gas separation apparatus 2, when the mixed gas is supplied to the first adsorption tank 6 in the adsorption process, the mixed gas flows in the order of the first adsorption tank 6 and the second adsorption tank 10. Therefore, as in the case of the first embodiment, the first gas is adsorbed by the gate-type adsorbent in the first adsorption tank 6. The first gas that has not been adsorbed by the gate-type adsorbent is adsorbed by the Langmuir-type adsorbent in the second adsorption tank 10 disposed downstream of the first adsorption tank 6. Accordingly, even in a case where the gate-type adsorbent is used, the first gas can be more reliably separated from the mixed gas. The first gas can be recovered by desorbing the first gas adsorbed in this way from the gate-type adsorbent and the Langmuir-type adsorbent in the first desorption process and the second desorption process. As described above, even in a case where the gate-type adsorbent is used, since the first gas can be more reliably separated from the mixed gas by combining the gate-type adsorbent with the Langmuir-type adsorbent, the recovery efficiency of the first gas from the mixed gas can be improved.

The gas separation apparatus 2A can also perform the first desorption process and the second desorption process by appropriately controlling the automatic on-off valves V1 to V5. Therefore, the gate-type adsorbent and the Langmuir-type adsorbent can be regenerated and used repeatedly.

Further, in the gas separation apparatus 2A and the gas separation method using the same, the running cost can be reduced for the same reason as in the first embodiment. In a case where the gas separation method has the pressure increasing process, as described in the first embodiment, the first gas is easily adsorbed by the gate-type adsorbent and the Langmuir-type adsorbent in the adsorption process performed after the pressure increasing process. As a result, it is possible to improve the recovery efficiency of recovering the first gas from the mixed gas.

In the embodiment in which the gas separation method has the return process, the first gas can be further separated from the concentrated gas. In addition, in the return process, while the first gas in the concentrated gas is re-adsorbed by the gate-type adsorbent and the Langmuir-type adsorbent, impurities (for example, the second gas) in the first adsorption tank 6 and the second adsorption tank 10 can be discharged. As a result, a purity of the recovered first gas can be improved. In particular, in a case where the above basic cycle is repeated, a concentration of the concentrated gas is increased each time the basic cycle is repeated by incorporating the return process into the basic cycle in the second and subsequent repetitions. As a result, the first gas having a higher-purity can be recovered by repeating the basic cycle.

The various embodiments and examples of the present invention have been described above. However, the present invention is not limited to the various exemplified embodiments and examples, and is intended to include all modifications within the meaning and scope equivalent to the claims, as well as the scope indicated by the claims.

For example, in the first embodiment, the gas (second gas) in the gas storage portion 20 is used to perform the first cleaning process, the second cleaning process, and the pressure increasing process. However, the first adsorption tank 6 and the second adsorption tank 10 may have a non-adsorbed gas supply portion (for example, a non-adsorbed gas supply source) for supplying non-adsorbed gas which is substantially not adsorbed by the gate-type adsorbent and the Langmuir-type adsorbent. The non-adsorbed gas supply portion may independently supply the non-adsorbed gas to the first adsorption tank 6 and the second adsorption tank 10, for example. In a case where the non-adsorbed gas is supplied to the first adsorption tank 6 and the second adsorption tank 10 independently, the non-adsorbed gas supplied to the first adsorption tank 6 and the second adsorption tank 10 may be different. The phrase "substantially not adsorbed by the gate-type adsorbent and the Langmuir-type adsorbent" means that the non-adsorbed gas may be slightly adsorbed by the gate-type adsorbent and the Langmuir-type adsorbent.

In the first embodiment, the first cleaning process, the second cleaning process, and the pressure increasing process may not be provided, and in the second embodiment, the pressure increasing process may not be provided.

In a case where the pressure for sufficiently desorbing the first gas in the gate-type adsorbent and the Langmuir-type adsorbent used is equal to or more than atmospheric pressure, a pressure regulating valve may be used as a pressure adjusting portion instead of the vacuum pump 22 shown in FIG. 3 and FIG. 4.

The connection relationship between the third gas pipe (second take-out pipe) 14 and the fourth gas pipe (third take-out pipe) 16 to the first adsorption tank 6 and the second adsorption tank 10 is not limited to those exemplified. The first to fifth on-off valves and other valves are not limited to an on-off valve that is controlled by a control device or the like and automatically open and close.

The gas separation apparatus may have a plurality of adsorption units in which the first adsorption tank 6 and the second adsorption tank 10 are connected in series. In this case, the plurality of adsorption units are connected in parallel. Each adsorption unit may perform a cycle composed of a plurality of processes described in the first and second embodiments. In the gas separation method using a gas separation apparatus having a plurality of adsorption units, it is preferable to shift a timing of performing a cycle, which is composed of a plurality of processes described in the first embodiment and the second embodiment, between the plurality of adsorption units. For example, while one adsorption unit performs the adsorption process, the other adsorption unit may perform the first desorption process. As a result, the target gas can be continuously taken out from the mixed gas. Alternatively, even in a case where the target gas is intermittently taken out from the mixed gas, an interval between taking out the target gas once and then taking out the target gas can be shortened. Therefore, the target gas can be taken out efficiently.

In a case where the gas separation is performed by using the gas separation apparatus having a plurality of adsorption units, when the adsorption process is completed by one adsorption unit, the gas in at least one of the first adsorption tank 6 and the second adsorption tank 10 of the adsorption unit may be used as the non-adsorbed gas in the first cleaning process and the second cleaning process of the other adsorption unit.

Another example of the gas separation method according to the present invention may include an adsorption process of causing a mixed gas containing a first gas and a second gas to flow through a first adsorption portion, which has a gate-type adsorbent for adsorbing the first gas, and a second adsorption portion, which is disposed in series with the first adsorption portion and has a Langmuir-type adsorbent for adsorbing the first gas, in that order, to increase pressures in the first adsorption portion and the second adsorption portion, thereby adsorbing the first gas to the gate-type adsorbent and the Langmuir-type adsorbent, and a desorption process of decreasing the pressures in the first adsorption portion and the second adsorption portion, thereby desorbing the first gas from the gate-type adsorbent and the Langmuir-type adsorbent. In this case, the second gas can be taken out via the second gas pipe connected to the second adsorption portion by the adsorption process. Further, by the desorption process, for example, the first gas can be taken out from the first gas pipe. In this case as well, since the gate-type adsorbent is used, it is possible to reduce the running cost.

Another example of the gas separation method can be suitably performed in a gas separation apparatus including, for example, an adsorption tank having the first adsorption portion and the second adsorption portion disposed in series with the first adsorption portion, a first gas pipe connected to the first adsorption portion side in the adsorption tank and flowing a mixed gas containing the first gas and a second gas different from the first gas, and a second gas pipe connected to the second adsorption portion side in the adsorption tank and taking out a passing gas obtained by passing the mixed gas through the first adsorption portion and the second adsorption portion in this order.

In the above explanation, a case where one of the first gas and the second gas of the mixed gas is used as the target gas and the target gas is separated from the mixed gas has been described. However, the gas separation apparatus and the gas separation method according to the present invention are applicable as long as the first gas and the second gas contained in the mixed gas are separated. Accordingly, it is also possible to use the first gas and the second gas as product gases, respectively.

The various embodiments and modifications may be combined as appropriate without departing from the spirit of the present invention.

### Reference Signs List

- 2,2A:: Gas separation apparatus
- 4:: First gas pipe
- 6:: First adsorption tank
- 10:: Second adsorption tank
- 12:: Second gas pipe (first take-out pipe)
- 14:: Third gas pipe (second take-out pipe)
- 16:: Fourth gas pipe (third take-out pipe)
- V1:: Automatic on-off valve (first on-off valve)
- V2:: Automatic on-off valve (second on-off valve)
- V3:: Automatic on-off valve (third on-off valve)
- V4:: Automatic on-off valve (fourth on-off valve)
- V5:: Automatic on-off valve (fifth on-off valve).

## Claims

1. A gas separation apparatus comprising:
a first adsorption tank that has a gate-type adsorbent for adsorbing a first gas;
a second adsorption tank that is connected to the first adsorption tank via a first on-off valve and has a Langmuir-type adsorbent for adsorbing the first gas;
a first gas pipe that is connected to the first adsorption tank, the first gas pipe being provided with a second on-off valve and through which a mixed gas containing the first gas and a second gas different from the first gas flows;
a second gas pipe that is connected to the second adsorption tank, the second gas pipe being provided with a third on-off valve, and taking out a passing gas obtained by passing the mixed gas through the first adsorption tank and the second adsorption tank in that order;
a third gas pipe that is connected to the first adsorption tank, the third gas pipe being provided with a fourth on-off valve, and taking out the first gas desorbed from the gate-type adsorbent; and
a fourth gas pipe that is connected to the second adsorption tank, the fourth gas pipe being provided with a fifth on-off valve, and taking out the first gas desorbed from the Langmuir-type adsorbent.

2. The gas separation apparatus according to claim 1, wherein
the third gas pipe and the fourth gas pipe are connected to a pressure regulator.

3. A gas separation method comprising:
an adsorption process of causing a mixed gas containing a first gas and a second gas different from the first gas to flow through a first adsorption tank, which has a gate-type adsorbent for adsorbing the first gas, and a second adsorption tank, which is connected to the first adsorption tank via an on-off valve and has a Langmuir-type adsorbent for adsorbing the first gas, in that order, by opening the on-off valve to increase pressures in the first adsorption tank and the second adsorption tank, thereby adsorbing the first gas in the mixed gas to the gate-type adsorbent and the Langmuir-type adsorbent, and taking out the second gas from a first take-out pipe connected to the second adsorption tank;
a first desorption process of desorbing the first gas from the gate-type adsorbent and the Langmuir-type adsorbent, and taking out the first gas from a second take-out pipe connected to the first adsorption tank by opening the on-off valve to decrease the pressure in the first adsorption tank to a pressure at which the first gas of the gate-type adsorbent is desorbed; and
a second desorption process of desorbing the first gas from the Langmuir-type adsorbent, and taking out the desorbed first gas from a third take-out pipe connected to the second adsorption tank by closing the on-off valve to decrease the pressure in the second adsorption tank after the first desorption process.

4. The gas separation method according to claim 3, further comprising:
a first cleaning process of taking out the first gas desorbed from the Langmuir-type adsorbent via the second take-out pipe while causing a non-adsorbed gas substantially not adsorbed to the Langmuir-type adsorbent to flow through the second adsorption tank by closing the on-off valve after the second desorption process; and
a second cleaning process of taking out the first gas desorbed from the Langmuir-type adsorbent and the gate-type adsorbent via the third take-out pipe while causing a non-adsorbed gas substantially not adsorbed to the gate-type adsorbent to flow from the second adsorption tank to the first adsorption tank by opening the on-off valve after the first cleaning process.

5. The gas separation method according to claim 3, further comprising:
a return process of returning a part of the gas taken out in the first desorption process and the second desorption process to at least one of the first adsorption tank and the second adsorption tank.

6. The gas separation method according to any one of claims 3 to 5, further comprising:
a pressure increasing process of increasing the pressure in the first adsorption tank and the second adsorption tank before the adsorption process.

7. A gas separation method comprising:
an adsorption process of causing a mixed gas containing a first gas and a second gas different from the first gas to flow through a first adsorption portion, which has a gate-type adsorbent for adsorbing the first gas, and a second adsorption portion, which is disposed in series with the first adsorption portion and has a Langmuir-type adsorbent for adsorbing the first gas, in that order, to increase pressures in the first adsorption portion and the second adsorption portion, thereby adsorbing the first gas to the gate-type adsorbent and the Langmuir-type adsorbent; and
a desorption process of decreasing the pressures in the first adsorption portion and the second adsorption portion, thereby desorbing the first gas from the gate-type adsorbent and the Langmuir-type adsorbent.
